# EUROPEAN PATENT APPLICATION

(11) **EP 2 055 749 A2**
(43) Date of publication of application: **06.05.2009**
(21) Application number: 08167844.3
(22) Date of filing: 29.10.2008
(51) Int. Cl.: C09D 5/03, C09D 175/16

(54) **Process for the production of powder coating compositions**

(30) Priority: 30.10.2007 US 1003 P
(71) Applicant: E. I. Du Pont de Nemours and Company, Wilmington, DE 19898 (US)
(72) Inventor: Flosbach, Carmen, 42287 Wuppertal (DE); Matten, Stefanie, 42111 Wuppertal (DE); Tuerk, Thomas, 84130 Dingolfing (DE)
(74) Representative: Blum, Joachim

(57) **Abstract**

A process for the preparation of powder coating compositions, which
(i) comprise a binder and at least one additive, the process comprising the synthesis of the binder in a reactor and the at least one additive being added to the starting materials used for synthesis of the binder and/or added to the still stirrable reactor contents before discharging the reactor contents from the reactor, or
(ii) comprise a binder, a crosslinker and at least one additive, the process comprising the synthesis of the crosslinker in a reactor and the binder and the at least one additive being added to the starting materials used for synthesis of the crosslinker and/or added to the still stirrable reactor contents before discharging the reactor contents from the reactor.

## Description

### Field of the Invention

The invention relates to a process for the production of powder coating compositions.

### Description of the Prior Art

The conventional process for the production of powder coating agents is extruding the powder coating composition, which has already been completely formulated by dry mixing of all the required components, i.e. binder resin(s), crosslinker(s) and additive(s), in the form of a pasty melt, cooling the melt, performing coarse comminution, fine grinding and then classifying to the desired grain fineness. Such process is known to the person skilled in the art, see for example Ullmann's Encyclopedia of industrial chemistry, Vol. A 18, page 481, 1991, Verlag Chemie Weinheim.

### Summary of the Invention

The invention relates to a process for the preparation of powder coating compositions, in particular powder clear coating compositions, which
(i) comprise a binder and at least one additive, the process comprising the synthesis of the binder in a reactor and the at least one additive being added to, and mixed with, the starting materials used for synthesis of the binder and/or added to, and mixed with, the still stirrable reactor contents during and/or after completion of the binder synthesis, but in any case before discharging the reactor contents from the reactor, or
(ii) comprise a binder, a crosslinker (crosslinking agent, curing agent, hardening agent) and at least one additive, the process comprising the synthesis of the crosslinker in a reactor and the binder and the at least one additive being added to, and mixed with, the starting materials used for synthesis of the crosslinker and/or added to, and mixed with, the still stirrable reactor contents during and/or after completion of the crosslinker synthesis, but in any case before discharging the reactor contents from the reactor.

### Detailed Description of the Embodiments

In the description and the claims, the terms "synthesis of the binder" and "synthesis of the crosslinker" are used. In this context, the terms include actual binder synthesis (embodiment (i) of the process according to the invention) and actual crosslinker synthesis (embodiment (ii) of the process according to the invention), each including any accompanying steps, with the exception of discharging the reactor contents after completion of the synthesis. Actual synthesis may relate to synthesis carried out in substance, i.e. in the melt, or synthesis carried out completely or in individual phases in the presence of diluting organic solvent. Examples of accompanying steps include, in particular, removing volatile reaction products, residual starting materials (e.g. monomers) and/or organic solvents, for example, by way of distillation, optionally assisted by reduced pressure.

In the description and the claims the term "reactor" is used. This relates to conventional equipment, which is suitable in particular for the batch preparation of synthetic resins and in which the conventional synthesis processes for synthetic resins may be carried out, for example condensation polymerizations, addition polymerizations and/or free-radical polymerizations of olefinic double bonds.

The powder coating compositions which can be prepared by the process according to the invention comprise a resin solids content which is composed of one or more binders and optionally one or more crosslinkers. In addition to the resin solids content, the powder coating compositions also comprise at least one additive.

Powder coating compositions which are chemically crosslinkable, in particular by free-radical polymerization of olefinic double bonds, are preferably prepared by the process according to the invention. It is particularly preferred to prepare powder coating compositions which are chemically crosslinkable by free-radical polymerization of olefinic double bonds under irradiation with high-energy radiation, in particular under UV irradiation, by the process according to the invention, especially to prepare powder clear coating compositions which are chemically crosslinkable by free-radical polymerization under UV irradiation. What are known as dual cure powder coating compositions (powder coating compositions comprising a resin solids content which can be cured by means of a plurality of different chemical crosslinking reactions, in particular a resin solids content which may be cured, both under UV irradiation by free-radical polymerization of olefinic double bonds, and also by thermal chemical crosslinking reactions which differ from the free-radical polymerization of olefinic double bonds) may also be prepared by the process according to the invention.

The binders may be thermoplastic, chemically self-crosslinkable or chemically externally crosslinkable (chemically crosslinkable using separate crosslinkers). Powder coating compositions which exclusively comprise thermoplastic binders as binders do not comprise any crosslinkers. Powder coating compositions which exclusively comprise chemically self-crosslinkable binders as binders may comprise one or more crosslinkers. Powder coating compositions which comprise chemically externally crosslinkable binders comprise one or more crosslinkers.

The binders used in the powder coating compositions are not subject to any specific restrictions, and are binders which are conventionally used for powder coatings and are solid at room temperature, for example appropriate polyester resins, polyurethane resins, (meth)acrylic copolymer resins or hybrid resins combining several of these polymer types.

(Meth)acrylic is to be understood, both here and in the following, as acrylic and/or methacrylic.

Chemically crosslinkable binders carry one or more different types of reactive functional groups which form the basis for thermal chemical crosslinking reactions and/or chemical crosslinking reactions induced by high-energy radiation, in particular UV radiation. Examples of thermal crosslinking reactions include the following which are known to a person skilled in the art: condensation reactions, addition reactions and the thermal (thermally induced and carried out) free-radical polymerization of olefinic double bonds in the presence of thermally cleavable radical initiators. A preferred example of a chemical crosslinking reaction which can be induced by high-energy radiation, in particular by UV irradiation in the presence of photoinitiators, is the free-radical polymerization of olefinic double bonds.

Binders which can be chemically crosslinked by condensation and/or addition reactions have appropriate crosslinkable functional groups. The condensation and addition reactions are chemical crosslinking reactions related to paint and coatings and are known to a person skilled in the art. Examples include the ring opening addition of an epoxide group to a carboxyl group to form an ester group and a hydroxyl group, the reaction of a hydroxyl group with a blocked isocyanate group to form a urethane group and to eliminate the blocking means, the reaction of a hydroxyl group with a N-methylol group to cause dehydration, the reaction of a hydroxyl group with a N-methylol ether group to eliminate the etherification alcohol, the interesterification reaction of a hydroxyl group with an ester group to eliminate the esterification alcohol, the transurethanification reaction of a hydroxyl group with a carbamate group to eliminate alcohol and the reaction of a carbamate group with a N-methylol ether group to eliminate the etherification alcohol.

Binders which can be chemically crosslinked by free-radical polymerization of olefinic double bonds have, for example, vinyl groups, allyl groups, maleinate groups, fumarate groups and/or preferably (meth)acryloyl groups. Examples of binders with the preferred (meth)acryloyl groups are (meth)acryloyl functional (meth)acrylic copolymers, polyurethane (meth)acrylates and polyester (meth)acrylates.

As previously mentioned, the chemically crosslinkable powder coating compositions may comprise one or more crosslinkers. The crosslinkers have one or more reactive groups which complement one or more functional groups of the binder(s), i.e. the functional groups of the crosslinkers can react with the functional groups of the binders to form covalent bonds and thus to crosslink chemically. Examples of chemical reactions of this type are the crosslinking reactions previously mentioned with respect to the description of chemically crosslinkable binders, i.e. addition and condensation reactions, and also the free-radical polymerization of olefinic double bonds.

The powder coating compositions may comprise one or more pigments and/or fillers corresponding to a pigment plus filler/resin solids weight ratio above 0:1 to 2:1. Powder clear coating compositions, i.e. powder coating compositions which are free of pigments and non-transparent fillers, in particular those which are entirely free of pigments and fillers, are preferably prepared by the process according to the invention.

The powder coating compositions comprise at least one additive. In this case, the additive(s) are each present in the powder coating compositions in individual proportions of, for example, 0.02 to 5 wt.-%, the total content of additives generally being at most 10 wt.-%. Examples of additives of this type are leveling agents, degassing agents, antioxidants, inhibitors, light stabilizers, matting agents, adhesion promoters, lubricants, catalysts and rheology control agents. Thermally cleavable radical initiators, especially for example C-C-cleaving initiators, such as, benzopinacole silyl ethers are mentioned in particular as additives in conjunction with powder coating compositions which can be chemically crosslinked by thermal free-radical polymerization of olefinic double bonds. Photoinitiators are mentioned in particular as additives in conjunction with powder coating compositions which can be chemically crosslinked under UV irradiation by free-radical polymerization of olefinic double bonds. Examples of photoinitiators comprise benzoin and derivatives thereof, acetophenone and derivatives thereof, for example 2,2-diacetoxyacetophenone, benzophenone and derivatives thereof, thioxanthone and derivatives thereof, anthraquinone, 1-benzoylcyclohexanol and organophosphorus compounds, such as, acylphosphine oxides.

Powder coating compositions, in particular powder clear coating compositions comprising a binder and at least one additive, may be prepared by the process according to the invention in its first embodiment, the process comprising the synthesis of the binder in a reactor and the at least one additive being added to, and mixed with, the starting materials used for synthesis of the binder and/or added to, and mixed with, the still stirrable reactor contents during and/or after completion of the binder synthesis, but in any case before discharging the reactor contents from the reactor. In other words, the additive(s) may be added at any stage of the binder synthesis, and may even be added to the starting materials used for synthesis of the binder. Whilst it is necessary for at least one additive to be added, the addition of one or more crosslinkers is optional and is a function of the desired resin solids composition of the powder coating composition. Further binders, i.e. those differing from the synthesized binder, pigments and fillers may also be added. Regarding the time of addition and admixing of crosslinkers, further binders, pigments and fillers the same as that stated above for the addition of the at least one additive applies.

Powder coating compositions, in particular powder clear coating compositions comprising a binder, a crosslinker and at least one additive, may be prepared by the process according to the invention in its second embodiment, the process comprising the synthesis of the crosslinker in a reactor and the binder and the at least one additive being added to, and mixed with, the starting materials used for synthesis of the crosslinker and/or added to, and mixed with, the still stirrable reactor contents during and/or after completion of the crosslinker synthesis, but in any case before discharging the reactor contents from the reactor. In other words, the binder and the additive(s) may be added at any stage of the crosslinker synthesis, and may even be added to the starting materials used for synthesis of the crosslinker. It is possible that not only one, but a plurality of binders are added as a function of the desired resin solids composition of the powder coating composition. Further crosslinkers, i.e. those which differ from the synthesized crosslinker, pigments and fillers may also be added. Regarding the time of addition and admixing of further crosslinkers, pigments and fillers the same as that stated above for the addition of the binder(s) and the at least one additive applies.

In both the first and the second embodiment of the process according to the invention, a person skilled in the art chooses a suitable time for adding the respective substances (additives, pigments, fillers, binders, crosslinkers). A person skilled in the art will avoid, in particular, adding substances, before or during the synthesis, of the type that involve the risk of undesirable chemical reactions when added before (to the starting materials for the synthesis) or during the synthesis. In general, the substance(s) is(are) added after completion of the actual binder or crosslinker synthesis, when the reactor contents are still stirrable and the added substance(s) may still be mixed with the reactor contents. The binder or crosslinker syntheses are generally carried out at elevated temperature, so completion of the actual synthesis is followed by a cooling phase during which the reactor contents are stirred until the start of, and optionally also during, the discharging phase thereof. When thermally cleavable radical initiators as additives, binders and/or crosslinkers are used in particular, they are preferably added after completion of the actual synthesis, in particular at a sufficiently low temperature so as to prevent any curing or any significant curing of the reactor contents. In other words, the addition of substances of this type particularly preferably takes place at the lowest possible temperature of the still stirrable reactor contents, for example during a cooling phase provided after completion of the synthesis and before discharging the reactor contents. If the substances to be added are solids with suitable melting points or melting temperatures, it may be expedient to add them at a temperature of the reactor contents which allows melting. This assists in mixing the added substance(s) with the reactor contents.

Powder coating compositions with the composition of ready-to-use powder coatings, i.e. comprising all required components, are preferably prepared by the process according to the invention. The process according to the invention is particularly suitable for the production of powder coating compositions with the composition of ready-to-use powder clear coatings, especially ready-to-use powder clear coatings which are crosslinkable by free-radical polymerization of olefinic double bonds under UV irradiation.

However, if desired, further processing of the powder coating compositions prepared by the process according to the invention is possible by combining them with further materials. For example, the powder coating compositions prepared by the process according to the invention may be extruded together with further materials to form ready-to-use powder coating compositions.

After completion of the process according to the invention the reactor contents in the form of a still free-flowing (non-solidified) powder coating composition are discharged into appropriate containers in which the powder coating composition subsequently solidifies, or the discharged reactor contents are immediately processed further. Immediate further processing means, in particular, cooling and allowing the discharged reactor contents to solidify, for example on a cooling conveyor, followed by coarse comminution of the now solid powder coating material to form, for example, powder coating chips and also, optionally, involves further processing to form a ready-to-use powder coating agent, for example by grinding and sieving or classifying processes conventional for preparing powder coating agents.

Particularly if powder coating compositions chemically crosslinkable by free-radical polymerization of olefinic double bonds under UV irradiation are prepared by the process according to the invention, attention should be paid to prevent UV or visible light from being able to reach the reactor contents (also applicable during discharging thereof). For example, for the purposes of the process according to the invention, it is advisable not to use a glass reactor but instead use a stainless steel reactor.

### EXAMPLE

### Preparation of a UV-curable powder clear coating agent:

529 pbw (parts by weight) of 1,6-hexane diisocyanate (HDI) were initially introduced into a stainless steel 2 litre reactor equipped with a stirrer, thermometer and column and 1 pbw methylhydroquinone and 0.1 wt.% dibutyltin dilaurate were added. The reaction mixture was heated to 60°C. 182 pbw of hydroxyethyl acrylate were then apportioned in such a manner that the temperature did not exceed 80°C. The reaction mixture was stirred at 80°C until the theoretical NCO content had been reached. Once the theoretical NCO content had been reached, 180 pbw of neopentylglycol and 74 pbw of 1,6-hexanediol were added one after the other, in each case in a manner such that a temperature of 75 to 120°C was maintained. The 1,6-hexanediol was not added until the theoretical NCO content had been reached. The reaction mixture was stirred at 120°C until no free isocyanate could be detected.

Into the hot melt 10 pbw of Irgacure® 2959 (photoinitiator from Ciba), 5 pbw of Powdermate® 486 CFL (levelling additive from Troy Chemical Company), 10 pbw of Tinuvin® 144 (HALS light stabilizer from Ciba) and 10 pbw of Tinuvin® 405 (UV absorber from Ciba) were added one after the other while stirring. Stirring was continued for 15 min. The hot mixture was then discharged into a metal can and allowed to cool to room temperature and solidify. After crushing, grinding and sieving of the solid material a powder clear coating agent with the same properties as the powder clear coating agent produced according to Example 3d of WO 2006/044506 was obtained.

## Claims

1. A process for the preparation of powder coating compositions, which comprise a binder and at least one additive, the process comprising the synthesis of the binder in a reactor and the at least one additive being added to, and mixed with, the starting materials used for synthesis of the binder and/or added to, and mixed with, the still stirrable reactor contents during and/or after completion of the binder synthesis, but in any case before discharging the reactor contents from the reactor.

2. The process of claim 1 wherein, in addition to the at least one additive, at least one further substance is added and admixed, selected from the group consisting of crosslinkers, further binders, pigments and fillers.

3. A process for the preparation of powder coating compositions, which comprise a binder, a crosslinker and at least one additive, the process comprising the synthesis of the crosslinker in a reactor and the binder and the at least one additive being added to, and mixed with, the starting materials used for synthesis of the crosslinker and/or added to, and mixed with, the still stirrable reactor contents during and/or after completion of the crosslinker synthesis, but in any case before discharging the reactor contents from the reactor.

4. The process of claim 3, wherein, in addition to the binder and the at least one additive, at least one further substance is added and admixed, selected from the group consisting of further binders, further crosslinkers, pigments and fillers.

5. The process of any one of the preceding claims, wherein the at least one additive is selected from the group consisting of leveling agents, degassing agents, antioxidants, inhibitors, light stabilizers, matting agents, adhesion promoters, lubricants, catalysts, rheology control agents, thermally cleavable radical initiators and photoinitiators.

6. The process of any one of the preceding claims, wherein the addition(s) takes/take place after completion of the actual synthesis.

7. The process of any one of the preceding claims, wherein chemically crosslinkable powder coating compositions are prepared.

8. The process of claim 7, wherein the powder coating compositions are chemically crosslinkable by free-radical polymerization of olefinic double bonds.

9. The process of claim 8, wherein the powder coating compositions are chemically crosslinkable by free-radical polymerization of olefinic double bonds under UV irradiation.

10. The process of any one of the preceding claims, wherein the powder coating compositions are those with the composition of ready-to-use powder coatings.

11. The process of any one of the preceding claims, wherein the powder coating compositions are powder clear coating compositions.
